# EUROPÄISCHE PATENTSCHRIFT

(11) **EP 0 570 420 B1**
(45) Veröffentlichungstag und Bekanntmachung des Hinweises auf die Patenterteilung: **26.07.1995**
(21) Anmeldenummer: 92903704.2
(22) Anmeldetag: 03.02.1992
(51) Int. Cl.: G11B 19/247, G11B 19/24, G11B 27/10

(54) **WIEDERGABEGERÄT**
REPRODUCTION DEVICE
APPAREIL DE REPRODUCTION

(30) Priorität: 08.02.1991 DE 4103827
(43) Veröffentlichungstag der Anmeldung: 24.11.1993
(73) Patentinhaber: DEUTSCHE THOMSON-BRANDT GMBH, 78048 Villingen-Schwenningen (DE)
(72) Erfinder: KÜHN, Hans-Robert, D-7742 St. Georgen (DE); BAAS, Dieter, D-7640 Kehl-Auenheim (DE)
(86) Internationale Anmeldenummer: EP9200225
(87) Internationale Veröffentlichungsnummer: WO9214247

(56) Entgegenhaltungen:
- EP-A- 0 178 657
- EP-A- 0 310 678
- EP-B- 0 214 256

## Beschreibung

Die Erfindung betrifft ein Wiedergabegerät, das Daten von einer rotierenden Platte mit konstanter Bahngeschwindigkeit liest.

Ein bekanntes derartiges Wiedergabegerät ist der CD-Spieler, der eine Compactplatte mit konstanter Bahngeschwindigkeit abspielt. In der englischen Sprache wird ein solches System als constant linear velocity system bezeichnet. Die gebräuchliche Abkürzung lautet CLV-System. Im Gegensatz dazu ist bei einem analogen Plattenspieler, bei dem es sich um ein constant angular system handelt, die Winkelgeschwindigkeit der Platte konstant. Häufig ist für dieses System die Abkürzung CAV-System anzutreffen.

Eine Compactplatte darf der Norm entsprechend mit einer Geschwindigkeit zwischen 1,2 m/s und 1,4 m/s vom Hersteller aufgenommen werden. Die Abtastgeschwindigkeit beim Abspielen einer Compactplatte in einem CD-Spieler muß daher mit ihrer Aufnahmegeschwindigkeit übereinstimmen. Wurde die Compactplatte mit einer Geschwindigkeit von z.B. 1,2 m/s aufgenommen, so muß sie auch mit derselben Geschwindigkeit von 1,2 m/s abgespielt werden. Weit aber die Aufnahmegeschwindigkeit zwischen 1,2 m/s und 1,4 m/s liegen darf, hat jede Compactplatte ihre eigene plattenspezifische Abtastgeschwindigkeit, z.B. 1,2 m/s oder 1,3 m/s oder 1,4 m/s.

Wenn z.B. ein Musikstück von einer Stunde Dauer auf einer Compactplatte aufgenommen wird, ist die Pitlänge bei einer größeren Aufnahmegeschwindigkeit größer als bei einer kleineren Aufnahmegeschwindigkeit. Deshalb ist die Spurlänge und damit auch die Anzahl der Datenspuren größer, wenn das Musikstück mit einer Geschwindigkeit von z.B. 1,4 m/s aufgenommen wurde als mit einer Geschwindigkeit von z.B. nur 1,2 m/s.

Die Abtastgeschwindigkeit wird bei einem CD-Spieler aus dem HFSignal abgeleitet, das ein Lichtstrahl von der Conpactplatte abtastet. In einem Decoder werden aus dem HF-Signal das Tonsignal und ein Synchronsignal gewonnen, das den Plattenantrieb genau auf die richtige Drehzahl regelt. Deshalb wird bei einem CD-Spieler jede Compactplatte mit der plattenspezifischen Abtastgeschwindigkeit gedreht. Die Bitrate der ausgelesenen Bits wird konstant gehalten. Jedoch ist nicht bekannt, wie groß die plattenspezifische Abtastgeschwindigkeit tatsächlich ist.

Um aber bein Spurspringen zum Auffinden einer gewünschten Plattenstelle, z.B. eines gewünschten Musikstücks, die Anzahl der zu überspringenden Spuren genau berechnen zu können, genügt es nicht zu wissen, daß die Abtastgeschwindigkeit zwischen 1,2 m/s und 1,4 m/s liegt. Je genauer die plattenspezifische Abtastgeschwindigkeit bekannt ist, desto genauer läßt sich die Anzahl der Spuren berechnen. Andernfalls ist von einem Mittelwert der Abtastgeschwindigkeit auszugehen.

Aus der EP-PS 0 214 256 ist ein CD-Spieler bekannt, der die plattenspezifische Abtastgeschwindigkeit dadurch ermittelt, daß die Umdrehungszahl der Platte aus der gefilterten Frequenz eines Fokusfehlersignals gewonnen wird.

Ein Nachteil bekannter CD-Spieler, welche die plattenspezifische Abtastgeschwindigkeit ermitteln, liegt nun darin, daß sie für jede eingelegte Platte ermittelt werden muß. Dieser Vorgang kostet jedoch Zeit. Der Bediener wünscht aber, daß die Platte möglichst gleich nach dem Einlegen abgespielt wird.

Es ist deshalb Aufgabe der Erfindung, bei einem CD-Spieler die Zeitspanne zwischen dem Einlegen und dem Abspielen der Platte zu verkürzen.

Die Erfindung löst diese Aufgabe dadurch, daß im Wiedergabegerät ein Speicher vorgesehen ist, um die spezifische Abtastgeschwindigkeit mehrerer Platten speichern zu können.

Durch die Maßnahme, die plattenspezifische Abtastgeschwindigkeit für mehrere Platten zu speichern, braucht die plattenspezifische Abtastgeschwindigkeit nicht mehr neu ermittelt zu werden, wenn eine bereits abgespielte Platte wieder in der CD-Spieler zum erneuten Abspielen eingelegt wird. Dadurch wird die Zeit zwischen dem Einlegen und dem Abspielen der Platte beträchtlich verkürzt.

Die einzelnen Platten lassen sich z.B. über die im Subcode der Platte enthaltenen codierten Katalognummern oder durch einzelne charakteristische Merkmale des Subcodes kennzeichnen.

Bei einem Magazinspieler ist es möglich, die Platten eindeutig einem Magazin zuzuordnen und die plattenspezifische Abtastgeschwindigkeit nach Platten und Magazin geordnet zu speichern.

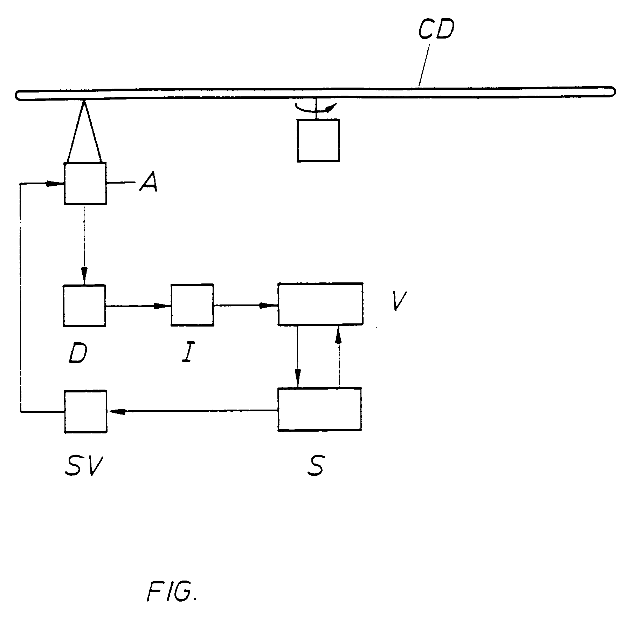

In der Figur ist ein erstes Ausführungsbeispiel der Erfindung gezeigt, das nun erläutert wird.

Die Compactplatte CD wird von einer optischen Abtastvorrichtung A abgetastet, die Daten an eine Datenverarbeitungsschaltung D liefert. Die Datenverarbeitungsschaltung D ist mit dem Eingang einer Identifikationsschaltung I verbunden, die den Subcode der eingelegten Platte CD auswertet. In einer Vergleichseinrichtung V wird geprüft, ob für den empfangenen Subcode bereits die plattenspezifische Abtastgeschwindigkeit in einem Speicher S gespeichert ist. Falls ja wird die gespeicherte plattenspezifische Abtastgeschwindigkeit aus dem Speicher S gelesen und den Servokreisen SV des CD-Spielers zur Verfügung gestellt. Falls für die eingelegte Platte noch nicht die plattenspezifische Abtastgeschwindigkeit gespeichert wurde, wird sie zunächst bestimmt, z.B. nach dem in der EP-PS 0 214 256 beschriebenen Verfahren, und anschließend im Speicher S gespeichert.

Bei einem weiteren Ausführungsbeispiel der Erfindung ist für den Bediener die Möglichkeit vorgesehen, die Daten im Speicher S zu löschen.

Die Erfindung ist für Wiedergabegeräte geeignet, die als CLV-System bezeichnet werden, weil sie eine Platte mit konstanter Bahngeschwindigkeit abtasten. Beispiele hierfür sind CDS-pieler, Videoplattenspieler, DRAW-Disc-Spieler und magneto-optische Aufzeichnungs- und Wiedergabegeräte.

## Patentansprüche

1. Wiedergabegerät, das Daten von einer rotierenden Platte (CD) mit konstanter Bahngeschwindigkeit liest und mit Mitteln ausgestattet ist, um die plattenspezifische Abtastgeschwindigkeit zu ermitteln, **dadurch gekenneichnet,** daß im Wiedergabegerät ein Speicher (S) vorgesehen ist, um die spezifische Abtastgeschwindigkeit mehrerer Platten speichern zu können.

2. Wiedergabegerät nach Anspruch 1, **dadurch gekennzeichnet,** daß der Bediener die Möglichkeit hat, der Inhalt des Speichers (S) zu löschen.

3. Wiedergabegerät nach Anspruch 1 oder 2, **dadurch gekennzeichnet,** daß es sich um einen CD-Spieler handelt.

4. Wiedergabegerät nach Anspruch 1, 2 oder 3, **dadurch gekennzeichnet,** daß es sich um ein Magazingerät handelt, bei dem die plattenspezifische Abtastgeschwindigkeit nach Platten und Magazinen geordnet im Speicher (S) speicherbar ist.

5. Wiedergabegerät nach Anspruch 1, 2, 3 oder 4, **dadurch gekennzeichnet,** daß eine Abtastvorrichtung (A), welche die Daten von einer Platte (CD) liest, mit einer Datenverarbeitungsschaltung (D) verbunden ist, deren Ausgang mit dem Eingang einer Identifikationsschaltung (I) zur Identifikation der Platte (CD) verbunden ist, daß der Ausgang des Identifikationsschaltung (I) mit einer Vergleichsschaltung (V) verbunden ist, die mit dem Speicher (S) verbunden ist, daß die Identifikationsschaltung (I) außerdem mit einer Vorrichtung zur Bestimmung der plattenspezifischen Abtastgeschwindigkeit verbunden ist und daß die Vorrichtung zur Bestimmung der plattenspezifischen Abtastgeschwindigkeit ebenfalls mit dem Speicher (S) verbunden ist.

## Claims

1. Reproduction device which reads data from a rotating disk (CD) at constant linear velocity and is equipped with means in order to determine the track-scanning speed specific to the disk, **characterized in that** a memory (S) is provided in the reproduction device in order to be able to store the specific track-scanning speed for several disks.

2. Reproduction device according to claim 1, **characterized in that** the user has the option of deleting the contents of the memory (S).

3. Reproduction device according to claim 1 or 2, **characterized in that** it is a CD player.

4. Reproduction device according to claim 1, 2 or 3, **characterized in that** it is a cartridge device in which the track-scanning speed specific to a disk can be stored in the memory (S) in order according to disks and cartridges.

5. Reproduction device according to claim 1, 2, 3 or 4, **characterized in that** a scanning device (A), which reads the data from a disk (CD), is connected to a data-processing circuit (D), the output of which is connected to the input of an identification circuit (I) for identifying the disk (CD), that the output of the identification circuit (I) is connected to a comparison circuit (V) which is connected to the memory (S), that the identification circuit (I) is also connected to a device for determining the track -scanning speed specific to the disk, and that said device for determining the track-scanning speed specific to the disk is also connected to the memory (S).

## Revendications

1. Lecteur qui permet de lire des informations sur un disque tournant (CD) à une vitesse tangentielle constante, et qui comprend des éléments servant à définir la vitesse de balayage spécifique du disque, **caractérisé en ce** que ledit lecteur comporte une mémoire (S) permettant d'enregistrer les vitesses de balayage spécifiques de plusieurs disques.

2. Lecteur selon la revendication 1 **caractérisé en ce** que l'usager peut effacer le contenu de la mémoire (S).

3. Lecteur selon l'une quelconque des revendications 1 ou 2 **caractérisé en ce** qu'il s'agit d'un lecteur de CD.

4. Lecteur selon l'une quelconque des revendications 1, 2 ou 3 **caractérisé en ce** qu'il s'agit d'un appareil à magasins, dans lequel les vitesses de balayage spécifiques peuvent être stockées dans ladite mémoire (S), en étant classées selon les différents disques et magasins.

5. Lecteur selon l'une quelconque des revendications 1, 2, 3 ou 4 **caractérisé en ce** qu'un dispositif de balayage (A) qui lit les informations sur un disque (CD), est relié à un circuit de traitement de l'information (D) dont la sortie est connectée à l'entrée d'un circuit d'identification (I) permettant d'identifier ledit disque (CD), caractérisé en outre en ce que la sortie dudit circuit d'identification (I) est connecté à un élément comparateur (V) qui, lui, est raccordé à ladite mémoire (S), et caractérisé également en ce que ledit circuit d'identification (I) est en outre connecté à un dispositif de détermination de la vitesse de balayage spécifique et que ledit dispositif de détermination de la vitesse de balayage spécifique est, lui aussi, raccordé à ladite mémoire (S).
